# EUROPEAN PATENT APPLICATION

(11) **EP 4 714 726 A1**
(43) Date of publication of application: **25.03.2026**
(21) Application number: 24201878.6
(22) Date of filing: 23.09.2024
(51) Int. Cl.: B60L 53/10, B60L 53/14, B60L 53/30, B60L 53/65, B60L 53/66, B60L 53/67, B60L 53/68, B60L 58/12, B60L 58/16, G01C 21/34, G06F 21/31, G06Q 10/04, G06Q 30/04, G06Q 30/06, G06Q 50/06, G07F 15/00, H02J 7/00, H04L 9/40, H04W 12/069

(54) **METHOD AND COMPUTER SYSTEM FOR ENABLING AUTHENTICTION AND AUTHORIZATION OF CHARGING OF AN AT LEAST PARTLY ELECTRICALLY DRIVEN VEHICLE**

(71) Applicant: VOLVO TRUCK CORPORATION, 405 08 Göteborg (SE)
(72) Inventor: Atefi, Reza, 412 54 Göteborg (SE); Fayazi, Shaghayegh, 412 54 Göteborg (SE)
(74) Representative: Valea AB

(57) **Abstract**

The present disclosure relates to a computer system for enabling authentication and authorization of charging an at least partly electrically driven vehicle (100). The computer system comprises processing circuitry configured to:
- determine if at least one charging station (103) associated with the vehicle supports a PnC (plug and charge) feature for authentication and authorization of charging of the vehicle (100);
- when the at least one charging station (103) supports the PnC feature, determine that the vehicle (100) comprises one or more than one charging certificate that is compatible with the at least one charging station (103) supporting the PnC feature;
- determine a possibility of success for each pair of charging station (103) and charging certificate when the vehicle (100); and to
- select the pair having the highest possibility of success to be used for charging the vehicle (100).

## Description

### TECHNICAL FIELD

The disclosure relates generally to a computer system, a vehicle, a computer-implemented method, computer program product and a non-transitory computer-readable storage medium. In particular aspects, the disclosure relates to enabling authentication and authorization of charging an at least partly electrically driven vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Charging of at least partly electrically driven vehicles is a field which is in constant development and improvement. Authentication and authorization are aspects related to charging where development and improvement work is done. Plug and charge (PnC) is a feature that automates authentication and authorization of charging. When the vehicle supports the PnC feature and is connected to a compatible charging station that also supports PnC, the vehicle can be charged without requiring extra steps done by the user to authenticate and authorize the charging. The vehicle is connected to the charging station and the charging begins. There is no need to use an RFID tag, an app or similar. One aim of PnC is to make the charging experience more seamless.

With the PnC feature, charging certificates are stored directly on the vehicle. When the vehicle is connected to the charging station, the onboard charging certificates are automatically utilized for authentication and authorization at the charging station.

By activating PnC on the vehicle, the user designates this as their primary authentication and authorization method. However, as many charging stations do not yet support this feature, the user may encounter authentication and authorization failures. In such cases, they must wait for the failure and manually switch to alternative authentication and authorization methods like Radio Frequency IDentification (RFID) or an app. This causes frustration and hinders the promotion of the PnC feature.

Conversely, permanently deactivating the PnC feature limits its use, requiring users to determine if PnC is supported in a charging station and manually enable it at charging stations that support the PnC feature. This contradicts the convenience and efficiency intended by PnC feature, potentially impeding its adoption and growth.

There is a strive to improve the PnC feature for enabling authentication and authorization of charging of an at least partly electrically driven vehicle.

### SUMMARY

According to a first aspect of the disclosure, a computer system is provided. The computer system is for enabling authentication and authorization of charging an at least partly electrically driven vehicle. The computer system comprises processing circuitry configured to:
- determine if the at least one charging station associated with the vehicle supports a PnC feature for authentication and authorization of charging of the vehicle;
- when the at least one charging station supports the PnC feature, determine that the vehicle comprises one or more than one charging certificate that is compatible with the at least one charging station supporting the PnC feature;
- determine a selection parameter for each pair of charging station and charging certificate when the vehicle comprises more than one charging certificate that is compatible with the at least one charging station; and to
- based on a result of a comparison of the selection parameter for each pair of charging station and charging certificate, select the pair having a selection parameter that fulfils a criterion to be used for charging the vehicle

The first aspect of the disclosure may seek to enable authentication and authorization of charging an at least partly electrically driven vehicle. A technical benefit may include that authentication and authorization of charging an at least partly electrically driven vehicle is enabled.

By ensuring that the charging station supports the PnC feature before the charging is started, the risk for authentication and authorization failures is reduced or even removed. Furthermore, since the charging certificate and charging station pair with highest probability of success is selected, it further reduces or removes the risk of authentication and authorization failures. In the end, this increases the probability of success for the charging of the vehicle. The criterion may be that the pair is the one with the highest possibility of success for energy transfer from the charging station to the vehicle, it may be the pair with highest priority, e.g. set by a user.

Optionally in some examples, including in at least one preferred example, the processing circuitry may be further configured to trigger the vehicle to travel to the charging station belonging to the pair fulfilling the criterion.

A technical benefit may include that authentication and authorization of charging an at least partly electrically driven vehicle is enabled. The vehicle will only be triggered to travel to the charging station in the pair that fulfils the criterion. This reduces or removes the scenario where the vehicle travels to a charging station where the charging will most likely not succeed, or a charging station that has a lower priority than required by for example the user. Since the vehicle is triggered to directly travel to the charging station which fulfills the criterion, the time spent on charging the vehicle or trying to charge the vehicle is reduced. Since the vehicle will not be triggered to travel to a charging station which does not fulfill the criterion, e.g. a low possibility of charging success or a low priority, but instead goes directly to the charging station fulfilling the criterion, it reduces the amount of energy consumed by the vehicle.

Optionally in some examples, including in at least one preferred example, the processing circuitry may be further configured to, when there is one or more compatible charging certificates, provide information indicating an option to enable the PnC feature in the vehicle. The information may be accessible to a user of the vehicle.

A technical benefit may include that an increased user experience is provided when he/she is provided with the option of enabling the PnC feature. This way, he/she can choose to enable or not enable the PnC feature according to his/hers preferences.

Optionally in some examples, including in at least one preferred example, the processing circuitry may be further configured to provide information indicating the at least one charging station that is associated with the vehicle. The information may be accessible to a user of the vehicle.

A technical benefit may include that the user will only be notified when the vehicle is within a certain distance of the at least one charging station that supports the PnC feature and is not disturbed with such notification at other times. This increases the safety the user may focus on the operating of the vehicle instead of getting distracted by notification when it is not relevant. The user is only notified when it is relevant, i.e. when the vehicle is within the distance of the at least one charging station that supports the PnC feature.

Optionally in some examples, including in at least one preferred example, the processing circuitry may be further configured to detect that the PnC feature has been enabled in the vehicle. The PnC feature may be set as a primary charging authorization and authorization method once it is enabled.

A technical benefit may include that the user does not have to enable the PnC feature anymore. It is sufficient that it enabled once, and then the PnC feature will be used as the primary charging authorization and authorization method for future charging of the vehicle. It is not necessary to enable the PnC feature each time the vehicle is to be charged. When the PnC feature is enabled, other features for authorization and authorization such as e.g. RFID, app etc., will not be used.

Optionally in some examples, including in at least one preferred example, the processing circuitry may be further configured to:
- upon detecting that the PnC feature has been enabled, activate the PnC feature to authorize and authenticate charging.

A technical benefit may include that, once the PnC feature has been activated, the vehicle will be prepared and ready for charging.

Optionally in some examples, including in at least one preferred example, the processing circuitry may be further configured to:
- determine that the vehicle is located within a distance of at least one charging station that supports the PnC feature, and to
- determine that the vehicle comprises one or more than one charging certificate that is compatible with the at least one charging station when it has been determined that the vehicle is located within the distance.

When the vehicle is located within the distance, it may be parked within the distance. A technical benefit may include that the check for compatible charging stations is only done when the vehicle is located within the distance. The check for compatible charging station is not performed when the vehicle is located far away from the charging station. Utilization of processing capacity is reduced since the check is done at certain times, i.e. When the vehicle is located within the distance, as compared to continuously checking.

Optionally in some examples, including in at least one preferred example, the processing circuitry may be further configured to:
- detect that the vehicle is connected to the charging station in the pair fulfilling the criterion; and to
- trigger start of a charging sequence once the PnC feature has been enabled and activated and the vehicle has been connected to the charging station in the pair fulfilling the criterion.

A technical benefit may include that there is no need for any extra trigger to start the charging session. The only trigger is the enabling and activation of the PnC and that the vehicle is connected to the charging station. The vehicle may be connected to the charging station via a wired or wireless charging link. This reduces the complexity and time of the charging session. Using the certificate belonging to the selected the pair fulfilling the criterion for the charging session reduces or removes the risk of charging failure.

Optionally, in some examples, including at least one preferred example, the selection parameter is associated with a possibility of success of energy transfer from the charging station to the vehicle or a priority for selecting the pair.

Optionally in some examples, including in at least one preferred example, the processing circuitry may be further configured to determine the possibility of success using a Machine Learning (ML) algorithm.

A technical benefit may include that the ML algorithm enables automatic determining of the possibility of success. The ML algorithm is easily scalable such that it can handle both a small and a large dataset. Other benefits may be that the accuracy of the determined selection parameter is improved with the use of the ML algorithm.

Optionally in some examples, including in at least one preferred example, vehicle information and/or charging station information may be used as input to the ML algorithm.

A technical benefit may include that using one or both of the vehicle information and charging station information increases the accuracy of the determination of the possibility of success.

According to a second aspect of the disclosure, a vehicle comprising the computer system of the first aspect is provided.

The second aspect of the disclosure may seek to enable authentication and authorization of charging an at least partly electrically driven vehicle. A technical benefit may include that authentication and authorization of charging an at least partly electrically driven vehicle is enabled.

Technical benefits of the second aspect of the disclosure may correspond to the technical benefits of the first aspect of the disclosure. Further, all examples of the first aspect are applicable to and combinable with all examples of the second aspect, and vice versa.

According to a third aspect of the disclosure, a computer-implemented method for enabling authentication and authorization of charging an at least partly electrically driven vehicle is provided. The method comprising:
- determining, by a processing circuitry of a computer system, if at least one charging station associated with the vehicle supports a PnC feature for authentication and authorization of charging of the vehicle;
- when the at least one charging station supports the PnC feature, determining, by the processing circuitry, that the vehicle comprises one or more than one charging certificate that is compatible with the at least one charging station supporting the PnC feature;
- determining, by the processing circuitry, a selection parameter for each pair of charging station and charging certificate when the vehicle comprises more than one charging certificate that is compatible with the at least one charging station; and
- based on a result of a comparison of the selection parameter for each pair of charging station and charging certificate, selecting, by the processing circuitry, the pair that fulfills a criterion to be used for charging the vehicle.

The third aspect of the disclosure may seek to enable authentication and authorization of charging an at least partly electrically driven vehicle. A technical benefit may include that authentication and authorization of charging an at least partly electrically driven vehicle is enabled.

Technical benefits of the third aspect of the disclosure may correspond to the technical benefits of the first and second aspects of the disclosure. Further, all examples of the first and second aspects are applicable to and combinable with all examples of the third aspect, and vice versa.

According to a fourth aspect of the disclosure, a computer program product is provided. The computer program product comprises program code for performing, when executed by a processing circuitry, the method of the third aspect.

The fourth aspect of the disclosure may seek to enable authentication and authorization of charging an at least partly electrically driven vehicle. A technical benefit may include that authentication and authorization of charging an at least partly electrically driven vehicle is enabled.

Technical benefits of the fourth aspect of the disclosure may correspond to the technical benefits of the first, second and third aspects of the disclosure. Further, all examples of the first, second and third aspects are applicable to and combinable with all examples of the fourth aspect, and vice versa.

According to a fifth aspect of the disclosure, a non-transitory computer-readable storage medium is provided. The non-transitory computer-readable storage medium comprises instructions, which when executed by a processing circuitry, cause the processing circuitry to perform the method of the third aspect.

The fifth aspect of the disclosure may seek to enable authentication and authorization of charging an at least partly electrically driven vehicle. A technical benefit may include that authentication and authorization of charging an at least partly electrically driven vehicle is enabled.

Technical benefits of the fifth aspect of the disclosure may correspond to the technical benefits of the first, second, third and fourth aspects of the disclosure. Further, all examples of the first, second, third and fourth aspects are applicable to and combinable with all examples of the fifth aspect, and vice versa.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary drawing illustrating a vehicle and charging stations, according to an example.
**FIG. 2** is an exemplary flow chart illustrating a method, according to an example.
**FIG. 3** is another view of **FIG. 1****,** according to an example.
**FIG. 4** is an exemplary flow chart illustrating a method, according to an example.
**FIG. 5** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Charging of at least partly electrically driven vehicles is a field which is in constant development and improvement. Authentication and authorization are aspects related to charging where development and improvement work is done. PnC is a feature for authentication and authorization of charging that enables a user to charge the vehicle without requiring the user to interact with the charging station after the charging cable has been plugged in. This removes the need for the user to, manually or as a separate step of action, authenticate and authorize the charging. The user simply plugs in the charging cable and the charging begins. There is a strive to improve the PnC feature for enabling authentication and authorization of charging of an at least partly electrically driven vehicle.

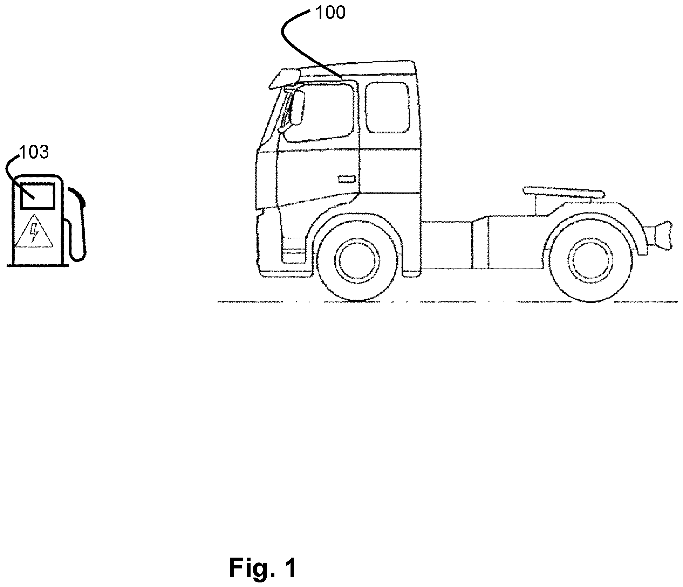

**FIG. 1** is an exemplary drawing illustrating a vehicle **100** and *n* number of charging stations **103,** according to an example. **FIG. 1** only shows one charging station **103** for the sake of simplicity.

The vehicle **100** is a heavy-duty vehicle, such as truck, bus, and construction equipment, among other vehicle types. Although the disclosure may be described with respect to a particular vehicle, the disclosure is not restricted to any particular vehicle, but may be also used in other vehicles such as, trailers, wheel loaders, articulated haulers, excavators, backhoe loaders, passenger cars, marine vessels etc. It may also be applied in various industrial construction machines or working machines.

The vehicle **100** may be a truck for towing one or more trailers (not shown). It shall however be understood that the vehicle may be any other type of vehicle, such as another type of truck, a bus, a passenger car, and construction equipment, such as an excavator, a wheel loader, etc. The vehicle **100** may be operated by a user (not shown) and/or be at least partly automatically driven, i.e., it may be a vehicle comprising autonomous driving capabilities. The vehicle **100** may be a fully electric vehicle or a hybrid vehicle. Using other words, the vehicle **100** may be an at least partly electrically driven vehicle. As such, the vehicle **100** may comprise one or more electric motors/generators and/or an internal combustion engine (not shown) for driving the vehicle **100.**

The term vehicle will be used herein when referring to any of the above types of vehicles.

Since the vehicle **100** is an at least partly electrically driven vehicle, it is arranged to be charged with electric power. The charging may be done at a charging station **103.** The charging may be done via a charging connection between the vehicle **100** and the charging station 103. The charging connection may be a wired charging cable or a wireless charging link.

The vehicle **100** comprises at least one charging certificate. The charging certificate may be referred to as a charging contract. The charging certificate is associated with the PnC feature for authentication and authorization of charging the vehicle 100 at a charging station **103** that supports PnC. The PnC feature may also be related to payment of the charging. The charging certificate may be stored onboard or offboard the vehicle **100.**

A charging certificate may be a digital file. The charging certificate may be a digital certificate. The charging certificate enables authentication and authorization by 1) encrypting and decrypting messages between the charging station **103** and the vehicle **100,** 2) detecting if messages have been tampered with and 3) verifying the communication partner. This charging certificate has a public and private key. The charging certificate associates the public key with a person or entity and defines the terms of use for the public key, and it is usually issued by a certificate authority to establish trust in authenticity of the public key. This charging certificate also serves as a digital contract connected to a billing address issues by the Electro mobility Service provider.

In order to use the PnC feature for authentication and authorization of the charging, the charging station **103** also needs to support the PnC feature. In conclusion, both the vehicle **100** and the charging station **103** need to support the PnC feature in order for it to be used for charging the vehicle **100** at the charging station **103.** If the PnC feature is not supported by the charging station **103** when an attempt to start a charging session is done, then the charging will fail and a switch to another authentication and authorization method needs to be done manually, e.g. RFID, app, just to mention some examples.

As mentioned above, the vehicle **100** comprises at least one charging certificate, which means that the vehicle **100** may comprise one, two, three or more charging certificates. At least one of the charging certificates may support the PnC feature. In addition to at least one charging certificate that supports the PnC feature, the vehicle **100** may or may not comprise at least one charging certificate that does not support the PnC feature. Thus, the vehicle **100** may comprise both charging certificates that support the PnC feature and charging certificates that do not support PnC feature.

The present disclosure may provide one or both of the following options to enable PnC feature:
1) Enable the PnC feature with on demand authentication and authorization.
2) Enable the PnC feature with automatic authentication and authorization.

Option 1 related to on demand authentication and authorization may comprise one, two or more of the following:
- An onboard system that will detect and show the nearby charging stations **103** to the user of the vehicle **100.**
- Identify charging stations **103** that support the PnC feature.
- Once the vehicle **100** is parked within 1km radius of a charging station **103** that is supporting the PnC feature.
   ∘ Check if any of the charging certificates installed on the vehicle **100** are compatible with the charging station **103.**
   ∘ Notify the user of the vehicle **100** on the option of enabling PnC for authentication and authorization.
   ∘ Provide the option to the user to activate PnC as the authentication and authorization method.

Option 2 related to on automatic authentication and authorization may comprise one, two or more of the following:
- once the PnC feature is enabled, it is set as the primary method for authentication and authorization.
- as soon the vehicle **100** is connected to the charging station **103,** charging certificates comprised in the vehicle **100** may be used to authenticate and authorize the charging session.

The features of option 1 and option 2 described above may be combined with each other in any suitable fashion.

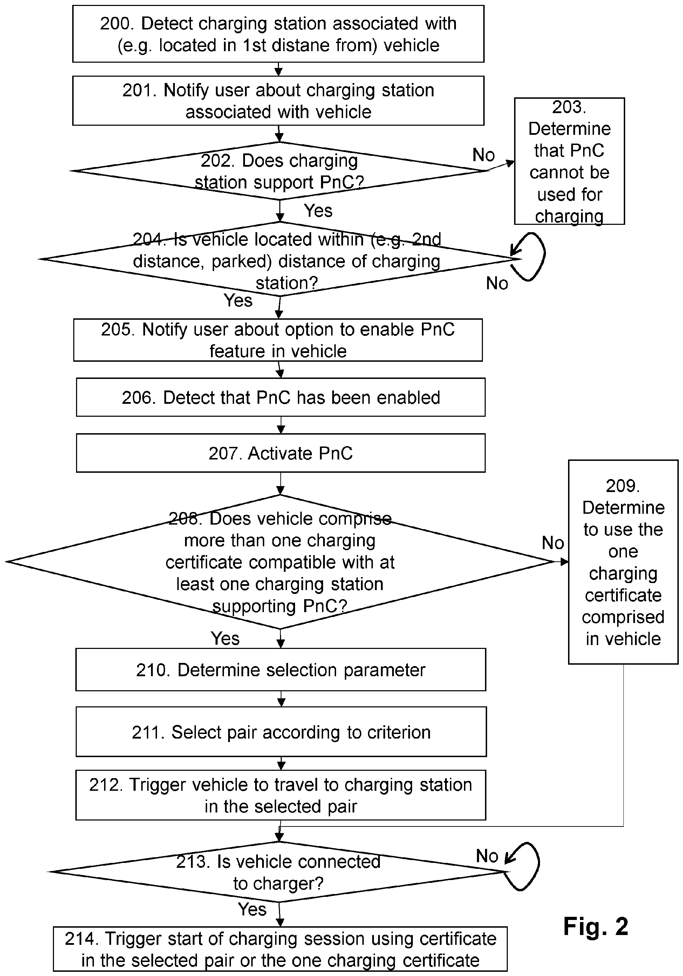

**FIG. 2** is an exemplary flow chart illustrating a method, according to an example. The method comprises at least one of the following steps, which steps may be performed in any suitable order than described below. The method may be performed by a computer system **500** or a processing circuitry comprised in the computer system **500.** The computer system **500** may be located onboard the vehicle **100** or offboard the vehicle **100.**

Step **200:** At least one charging station **103** associated with the vehicle **100** may be detected. When the at least one charging station **103** is associated with the vehicle **100,** it may be for example located in a first distance from the vehicle **100.** The first distance may be for example in the range of 1-2km.

Step **201:** A user may be notified about the detected charging station **103** that is associated with the vehicle **100.**

Step **202:** It is checked whether at least one charging station **103** supports the PnC feature. It may be the at least one charging station **103** that was detected in step **201** that is checked, it may be at least one charging station **103** associated with the vehicle **100** in some other way that is checked, for example at least one charging station **103** where the vehicle **100** will probably stop for charging at a future route, at least one charging station **103** belonging to a network of charging stations that the vehicle **100** has a priority of using compared to other networks, just to mention some examples. If the at least one charging station **103** does not support the PnC feature, the method proceeds to step **203,** as indicated with "no" in **FIG. 2****.** If the at least one charging station **103** does support the PnC feature, the method proceeds to step **204,** as indicated with "yes" in **FIG. 2****.**

Step **203:** This step may be performed if at least one charging station **103** does not support the PnC feature. It is determined that the PnC feature cannot be used for charging because it does not support the PnC feature.

Step **204:** This step may be performed if at least one charging station **103** does support the PnC feature. It may be checked if the vehicle **100** is located within a distance of the at least one charging station **103,** i.e. at least one charging station **103** that supports the PnC feature. The distance may be a second distance, for example in the range of 100-200 meters. The second distance may be shorter than the first distance in step **200.** When the vehicle **100** is located within the distance of the at least one charging station **103,** it may be parked at the distance of the at least one charging station **103.** If the vehicle **100** is not located within the distance of at least one charging station **103,** as indicated with "no" in **FIG. 2****,** then step **204** is repeated. If the vehicle **100** is located within the distance of at least one charging station **103,** as indicated with "yes" in **FIG. 2****,** then the method proceeds to step **205.**

Step **205:** The user of the vehicle may be notified about an option to enable the PnC feature in the vehicle **100.** The user may be for example a driver of the vehicle **100,** an operator of the vehicle **100,** a fleet manager, just to mention some examples. The user may be notified by providing information indicating the option to enable the PnC feature to for example a mobile phone, a table computer, a stationary computer, a vehicle onboard display, an audio device, just to mention some examples.

Step **206:** The PnC feature is detected to have been enabled. The enabling may be done by a user of the vehicle **100,** for example as a result of being notified in step **205,** or it may be automatically enabled by the vehicle **100,** the computer system **500** or any other vehicle device, without user interaction.

Enabling may be part of the option to enable and disable the PnC feature, e.g. on and off in a menu. When the PnC feature is enabled, it can be used for charging authentication and authorization, otherwise even if the vehicle **100** is capable of using the PnC feature for authentication and authorization it will be ignored if it has not been enabled, and other authentication and authorization methods such as the App or RFID card may be used.

Step **207:** After the PnC feature has been enabled, the PnC feature is activated. The activation may be done manually by the user, or it may be done automatically by the vehicle **100,** the computer system **500,** the processing circuitry **502** or any other vehicle device without user interaction.

Once PnC feature has been enabled, activation of the PnC feature is needed so that the PnC feature can initiate the charging sequence. Activation may comprise preparing and running an underlying PnC algorithm in the vehicle master ECU.

Step **208:** This step may be performed after the PnC feature has been enabled and activated. It is checked if the vehicle **100** comprises more than one charging certificate that is compatible with at least one charging station supporting the PnC feature. If the result of the check is positive, as indicated with "yes" in **FIG. 2****,** then the method proceeds to step **210.** If the result of the check is negative, as indicated with "no" in **FIG. 2****,** then the method proceeds to step **209.**

Step **209:** This step is performed if the vehicle **100** does not comprise more than one charging certificate compatible with at least one charging station supporting the PnC feature. This means that the vehicle **100** comprises only one charging certificate that supports PnC feature. It is determined to use the one charging certificate that supports the PnC feature. After step **209** has been performed, the method may proceed to step **213.**

Step **210:** This step is performed if the vehicle **100** comprises more than one charging certificate that is compatible with at least one charging station supporting the PnC feature, i.e. both the vehicle **100** comprises m number of charging certificates that is compatible with at least one charging station **103** supporting the PnC feature, where m is a positive integer larger than one. For example, the vehicle **100** comprises 2, 3, 4 or 5 charging certificates that is compatible with at least one charging station 103 supporting the PnC feature.

When there is more than one charging certificate that are compatible with the at least one charging station **103** supporting the PnC feature, then a selection parameter for each pair of charging certificate and charging station **103** is determined. A pair comprises a charging certificate and a compatible charging station **103.** The selection parameter may be associated with, for example, a possibility of success of the energy transfer from the charging station **103** to the vehicle **100,** it may be associated with the priority of each charging certificate or charging station **103** in which they are to be used, etc. The selection parameter may be determined by determining the possibility of success, by obtaining user input indicating the selection parameter, etc.

If the selection parameter is associated with a possibility of success, then step **210** may comprise to determine the possibility of success for each pair of charging station and charging certificate. The possibility of success may be described as a likelihood of energy transfer from the charging station **103** to the vehicle **100.** Step **210** may comprise quantifying the possibility of success of the energy transfer from the charging station **103** to the vehicle 100, and the quantification may be a percentage of possibility of success, using any other quantification parameter.

The possibility of success may be determined using any suitable method. The possibility of success is the success of charging the vehicle **100** without any failure or with a risk of failure that is below a failure threshold.

The possibility of success may be determined using a Machine Learning method. For example, an onboard classifier such as the Support Vector Machine (SVM) may be used. Other methods such as K Nearest Neighbor (KNN), random forest and decision trees can be used as well for determining the possibility of success. The result of the determining may be for example a percentage of the possibility of success, where the possibility increases with an increasing percentage. Information from the vehicle **100** and charging station **103** may be used as the input to the classifier. Note that percentage is only an example, and that other parameters for quantifying the possibility of success may also be applicable.

Examples of input from the vehicle **100** may be at least one of the following:
∘ State of Health (SOH)
∘ State of Charge (SOC)
∘ Supported charging types, e.g. Combined Charging System (CCS), Megawatt Charging System (MCS), etc.
∘ Temperature, e.g. ambient temperature, battery temperature, vehicle temperature.
∘ Charging Electronic Control Unit (ECU) hardware and software version
∘ The number of batteries configured.
∘ Electromobility Service Provider (EMSP).
∘ Charging standard
∘ Battery type.
∘ Y-capacitance.

Input from the charging station **103** may be for example at least one of the following:
- Charging Point Operator (CPO)
- Charger SW version only if available
- Charging types, for example CCS, MCS, etc.,
- Charging standard.

Table 1 below shows an example of pairs of charging certificate and charging station **103** that are compatible with each other such that the PnC feature can be used for authentication and authorization for charging the vehicle **100.** In the example of Table 1, the vehicle **100** comprises six pairs of charging certificates that are compatible with the at least one charging station **103** supporting the PnC feature. The possibility of success is exemplified with a percentage.

**Table 1**

| **Pair** | **Charging station** | **Charging certificate** | **Possibility of success** |
|---|---|---|---|
| Pair 1 | Charging station A | Charging certificate i | 90% |
| Pair 2 | Charging station A | Charging certificate ii | 80% |
| Pari 3 | Charging station A | Charging certificate iii | 85% |
| Pair 4 | Charging station B | Charging certificate iv | 53% |
| Pair 5 | Charging station C | Charging certificate v | 60% |
| Pair 6 | Charging station C | Charging certificate vi | 74% |

If the selection parameter is associated with a priority of which certificate or charging station **103** to be used, the selection parameter may be determined by obtaining user input indicating the selection parameter. The selection parameter may indicate the priority of each charging certificate, of each charging station **103** or both the charging certificate and the charging station **103.** The selection parameter may indicate a prioritization of use of, for example, a certificate, a charging station **103,** a charging station brand etc.

Step **211:** The pair having a selection parameter that fulfills the criterion is selected. If the selection parameter is associated with possibility of success, then the criterion may be that the pair with the highest possibility of success is selected. The determined possibilities of success are compared to each other, and the pair with highest possibility may be selected. Using the example in Table 1, the pair with charging station A and charging certificate i is selected because it has the highest percentage, i.e. 90%.

If the selection parameter is associated with a priority, then the pair with the highest value of the priority parameter may be selected. The values of the priority parameters are compared to each other, and the pair with the highest priority may be selected.

Step **212:** The vehicle **100** may be triggered to travel to the charging station 103 in the pair that was selected because it fulfilled the criterion, for example the one that has the highest possibility of success, which has the highest priority etc. Using the example in Table 1, the vehicle **100** may be triggered to travel to charging station A. Triggering the vehicle **100** to travel to the charging station **103** may comprise to provide information to the user indicating which charging station **103** the vehicle **100** should travel to, it may comprise to provide information indicating a recommend a route for traveling to the charging station **103,** it may comprise automatically starting the vehicle **100,** it may comprise automatically triggering the vehicle **100** to drive to the charging station **103,** for example in the case of an at least partly autonomous vehicle etc.

Providing information indicating a recommended route for traveling to the charging station **103** may comprise providing information to the vehicle's navigation system so that the recommended route is presented for the user and the user may be prompted to apply or decline the recommended route for traveling to the charging station **103.**

Providing information indicating a recommended route for traveling to the charging station **103** may comprise determining at least one navigation parameter and providing the navigation parameter to the vehicle's navigation system which determines and presents a recommended route to the user. The at least one navigation parameter may be determined by the navigation system, or it may be determined by some other entity comprised in the vehicle **100** and provided to the navigation system. The user may be prompted to apply or decline the recommended route for traveling to the charging station 103.

The at least one navigation parameter may comprise a destination of a route to be travelled by the vehicle **100** to reach the charging station **103.** The destination may be the geographical position of the charging station **103.** If the vehicle **100** is currently set to travel a route towards a certain destination, then the at least one navigation parameter may be a changed navigation parameter where the destination has been changed to be the position of the charging station **103** or where an intermediate destination being the position of the charging station **103** has been added to the route.

Step **213:** When the vehicle **100** has arrived at the charging station **103** supporting the PnC feature or is located in proximity of the charging station **103** supporting the PnC feature, it is checked if the vehicle **100** is connected to the charging station **103.** The vehicle 100 may be connected to the charging station **103** via a wired or wireless charging connection. If the vehicle 100 is connected to the charging station **103,** as indicated with "yes" in **FIG. 2****,** then the method proceeds to step **214.** If the vehicle **100** is not connected to the charging station **103,** as indicated with "no" in **FIG. 2****,** then step **213** is repeated.

Step **213** may be performed after step **212** or after step **209.**

Step **214:** This step may be performed when the vehicle **100** is connected to the charging station **103.** The charging session is triggered to start and using the charging certificate in the selected pair that fulfils the criterion, in case of more than one charging certificates that are compatible with the at least one charging station supporting the PnC feature. In the case of only one charging certificate that is compatible with the at least one charging station supporting the PnC feature, then the charging session is triggered to start and using the one charging certificate is used for the charging of the vehicle **100.** The detection of the vehicle **100** being connected to the charging station **103** may be the same as triggering start of the charging session.

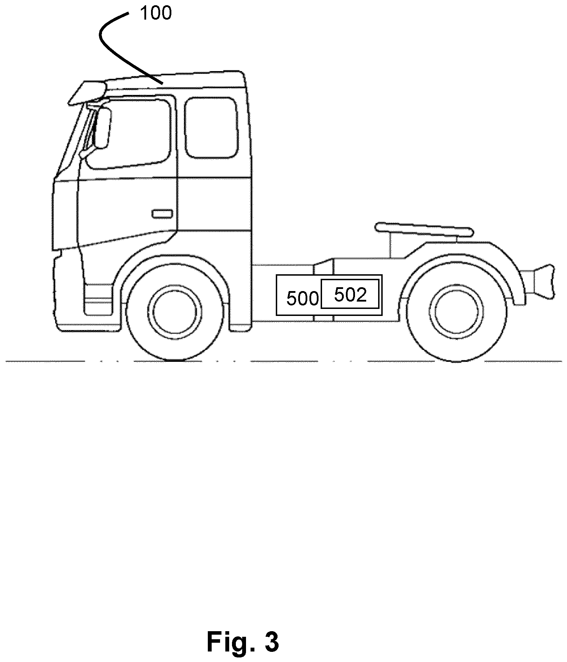

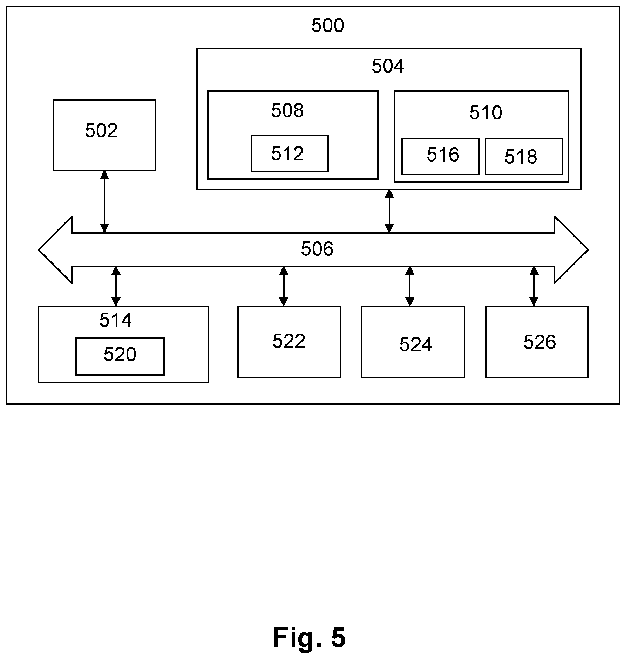

**FIG. 3** is another view of **FIG. 1****,** according to an example. **FIG. 3** illustrates a vehicle **100.** The vehicle comprises a computer system **500.** The computer system **502** comprises a processing circuitry **502.** The computer system **500** and the processing circuitry will later also be described in relation to **FIG. 5****.**

**FIG. 3** illustrates the computer system **500** for enabling authentication and authorization of charging an at least partly electrically driven vehicle **100.** The computer system **500** comprises processing circuitry **502** configured to determine if at least one charging station **103** associated with the vehicle supports a PnC feature for authentication and authorization of charging of the vehicle **100.**

The processing circuitry **502** is configured to, when the at least one charging station **103** supports the PnC feature, determine that the vehicle **100** comprises one or more than one charging certificate that is compatible with the at least one charging station **103** supporting the PnC feature.

The processing circuitry **502** is configured to determine a selection parameter for each pair of charging station **103** and charging certificate when the vehicle **100** comprises more than one charging certificate **103** that is compatible with the at least one charging station **103.** The selection parameter may be associated with a possibility of success of energy transfer from the charging station to the vehicle or a priority for selecting the pair. The possibility of success may be determined using a Machine Learning (ML) algorithm. Vehicle information and/or charging station information may be used as input to the ML algorithm. The possibility of success may be described as a likelihood of energy transfer from the charging station **103** to the vehicle **100.**

The processing circuitry **502** is configured to, based on a result of a comparison of the selection parameter, select the pair fulfilling the criterion to be used for charging the vehicle **100.**

The processing circuitry **502** may be configured to trigger the vehicle **100** to travel to the charging station 103 belonging to the pair that fulfils the criterion.

The processing circuitry **502** may be configured to, when there is one or more compatible charging certificates, provide information indicating an option to enable the PnC feature in the vehicle **100.** The information may be accessible to a user of the vehicle **100.**

The processing circuitry **502** may be configured to provide information indicating the at least one charging station **103** that is associated with the vehicle **100.** The information may be accessible to a user of the vehicle **100.**

The processing circuitry **502** may be configured to detect that the PnC feature has been enabled in the vehicle **100.** The PnC feature may be set as a primary charging authorization and authorization method once it is enabled.

The processing circuitry **502** may be configured to, upon detecting that the PnC feature has been enabled, activate the PnC feature to authorize and authenticate charging of the vehicle **100.**

The processing circuitry **502** may be configured to determine that the vehicle **100** is located within a distance of at least one charging station **103** that supports the PnC feature. The processing circuitry **502** may be configured to determine that the vehicle **100** comprises one or more charging certificates that is compatible with the at least one charging station **103** when it has been determined that the vehicle **100** is located within the distance.

The processing circuitry **502** may be configured to detect that the vehicle **100** is connected to the charging station **103** in the pair with highest possibility of success.

The processing circuitry **502** may be configured to trigger the start of a charging sequence once the PnC feature has been enabled and activated and the vehicle **100** has been connected to the charging station **103** in the pair fulfilling the criterion.

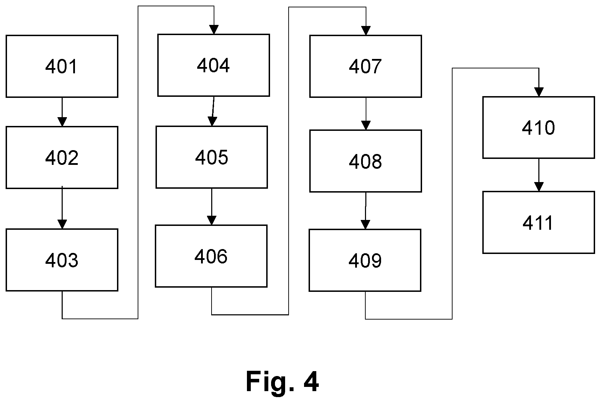

**FIG. 4** is a flow chart of a method to for enabling authentication and authorization of charging an at least partly electrically driven vehicle **100,** according to an example. The method comprises at least one of the following steps, which steps may be performed in any suitable order than described below.

Steo **400:** This step corresponds to step **201** in **FIG. 2****.** The processing circuitry 402 may provide information indicating the at least one charging station **103** that is associated with the vehicle **100.** The information may be accessible to a user of the vehicle 100.

Step **401:** This step corresponds to step **201** in **FIG. 2****.** The processing circuitry **502** of a computer system **500** determines if at least one charging station 103 associated with the vehicle **100** supports a PnC feature for authentication and authorization of charging of the vehicle **100.**

Step **402:** This step corresponds to step **204** in **FIG. 2****.** The processing circuitry **502** may determine that the vehicle **100** is located within a distance of at least one charging station 103 that supports the PnC feature.

Step **403:** This step corresponds to step **205** in **FIG. 2****.** When there is one or more compatible charging certificates, the processing circuitry **502** may provide information indicating an option to enable the PnC feature in the vehicle **100.** The information may be accessible to a user of the vehicle **100.**

Step **404:** This step corresponds to step **206** in **FIG. 2****.** The processing circuitry **502** may detect that the PnC feature has been enabled in the vehicle **100.** The PnC feature may be as a primary charging authorization and authorization method once it is enabled.

Step **405:** This step corresponds to step **207** in **FIG. 2****.** Upon detecting that the PnC feature has been enabled, the processing circuitry **502** may activate the PnC feature to authorize and authenticate charging of the vehicle **100.**

Step **406:** This step corresponds to step **208** in **FIG. 2****.** When the at least one charging station **103** supports the PnC feature, the processing circuitry **502** determines that the vehicle **100** comprises one or more than one charging certificate that is compatible with the at least one charging station **103** supporting the PnC feature.

The decision in step **406** may be taken when it has been determined that the vehicle **100** is located within the distance, i.e. the decision taken in step **402.**

Step **407:** This step corresponds to step **210** in **FIG. 2****.** The processing circuitry **502** determines a selection parameter for each pair of charging station **103** and charging certificate when the vehicle **100** comprises more than one charging certificate **103** that is compatible with the at least one charging station **103.** The selection parameter may be associated with a possibility of success of energy transfer from the charging station **103** to the vehicle **100,** it may be associated with a priority, etc.

Step **408:** This step corresponds to step **211** in **FIG. 2****.** Based on a result of a comparison of the selection parameter, the processing circuitry **502** selects the pair fulfilling a criterion to be used for charging the vehicle **100.**

Step **409:** This step corresponds to step **212** in **FIG. 2****.** The processing circuitry **502** triggers the vehicle **100** to travel to the charging station **103** belonging to the pair fulfilling the criterion.

Step **410:** This step may correspond to step **213** in **FIG. 2****.** The processing circuitry **502** may detect that the vehicle **100** is connected to the charging station **103** in the pair that fulfils the criterion.

Step **411:** This step may correspond to step **214** in **FIG. 2****.** The processing circuitry **502** may trigger the start of a charging sequence once the PnC feature has been enabled and activated and the vehicle **100** has been connected to the charging station **103** in the pair that fulfils the criterion.

A computer program product comprises program code for performing, when executed by the processing circuitry **502,** the method of in **FIG. 4****.**

A non-transitory computer-readable storage medium comprising instructions, which when executed by a processing circuitry **502,** cause the processing circuitry **502** to perform the method of **FIG. 4****.**

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device
interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system **500** for enabling authentication and authorization of charging an at least partly electrically driven vehicle **100,** wherein the computer system 500 comprises processing circuitry **502** configured to:
- determine if at least one charging station **103** associated with the vehicle supports a PnC feature for authentication and authorization of charging of the vehicle **100;**
- when the at least one charging station **103** supports the PnC feature, determine that the vehicle **100** comprises one or more than one charging certificate that is compatible with the at least one charging station **103** supporting the PnC feature;
- determine a selection parameter for each pair of charging station **103** and charging certificate when the vehicle **100** comprises more than one charging certificate **103** that is compatible with the at least one charging station **103;** and to
- based on a result of a comparison of the selection parameter, select the pair fulfilling a criterion to be used for charging the vehicle **100.**

Example 2: The computer system **500** of example 1, wherein the processing circuitry **502** is further configured to:
- trigger the vehicle **100** to travel to the charging station **103** belonging to the pair that fulfils the criterion.

Example 3: The computer system **500** of any of examples 1-2, wherein the processing circuitry **502** is further configured to:
- when there is one or more compatible charging certificates, provide information indicating an option to enable the PnC feature in the vehicle **100,** wherein the information is accessible to a user of the vehicle **100.**

Example 4: The computer system **500** of any of examples 1-3, wherein the processing circuitry **502** is further configured to provide information indicating the at least one charging station **103** that is associated with the vehicle **100,** wherein the information is accessible to a user of the vehicle **100.**

Example 5: The computer system **500** of any of examples 3-4, wherein the processing circuitry **502** is further configured to:
- detect that the PnC feature has been enabled in the vehicle **100,** and wherein the PnC feature is set as a primary charging authorization and authorization method once it is enabled.

Example 6: The computer system **500** of any of examples 1-5, wherein the processing circuitry **502** is further configured to:
- upon detecting that the PnC feature has been enabled, activate the PnC feature to authorize and authenticate charging of the vehicle **100.**

Example 7: The computer system **500** of any of examples 1-6, wherein the processing circuitry **502** is further configured to:
- determine that the vehicle **100** is located within a distance of at least one charging station **103** that supports the PnC feature; and to
- determine that the vehicle **100** comprises one or more charging certificates that are compatible with the at least one charging station **103** when it has been determined that the vehicle **100** is located within the distance.

Example 8: The computer system **500** of any of examples 1-7, wherein the processing circuitry **502** is further configured to:
- detect that the vehicle **100** is connected to the charging station **103** in the pair that fulfils the criterion; and to
- trigger start of a charging sequence once the PnC feature has been enabled and activated and the vehicle **100** has been connected to the charging station **103** in the pair that fulfils the criterion.

Example 9: The computer system **500** of any of example 1-8, wherein the selection parameter is associated with a possibility of success of energy transfer from the charging station **103** to the vehicle **100** or a priority for selecting the pair.

Example 10: The computer system **500** of any of example 1-8, wherein the possibility of success is determined using a ML algorithm.

Example 11: The computer system **500** of example 9, wherein vehicle information and/or charging station information is used as input to the ML algorithm.

Example 12: A vehicle **100** comprising the computer system **500** of any of examples 1-11.

Example 13: A computer-implemented method for enabling authentication and authorization of charging an at least partly electrically driven vehicle **100,** the method comprising:
- *determining* **202, 401,** by a processing circuitry **502** of a computer system **500,** if at least one charging station **103** associated with the vehicle **100** supports a plug and charge, PnC, feature for authentication and authorization of charging of the vehicle 100;
- when the at least one charging station **103** supports the PnC feature, *determining* **208, 406,** by the processing circuitry **502,** that the vehicle **100** comprises one or more than one charging certificate that is compatible with the at least one charging station **103** supporting the PnC feature;
- *determining* **210, 407,** by the processing circuitry **502,** a selection parameter for each pair of charging station **103** and charging certificate when the vehicle **100** comprises more than one charging certificate **103** that is compatible with the at least one charging station **103;** and
- based on a result of a comparison of the selection parameter for each pair of charging station **103** and charging certificate, *selecting* **211, 408,** by the processing circuitry **502,** the pair fulfilling a criterion to be used for charging the vehicle **100.**

Example 13: The method of example 12, further comprising:
- *triggering* **212, 409,** by the processing circuitry **502,** the vehicle **100** to travel to the charging station **103** belonging to the pair that fulfils the citerion.

Example 14: The method of any of examples 12-13, further comprising:
- when there is one or more compatible charging certificates, *providing* **205, 403,** by the processing circuitry **502,** information indicating an option to enable the PnC feature in the vehicle **100,** wherein the information is accessible to a user of the vehicle **100.**

Example 15: The method of any of examples 12-14, further comprising:
- *providing* **201, 400,** by the processing circuitry **402,** information indicating the at least one charging station **103** that is associated with the vehicle **100,** wherein the information is accessible to a user of the **vehicle** 100.

Example 16: The method of any of examples 12-15, further comprising:
- *detecting* **206, 404,** by the processing circuitry **502,** that the PnC feature has been enabled in the vehicle **100,** and wherein the PnC feature is set as a primary charging authorization and authorization method once it is enabled.

Example 17: The method of example 16, further comprising:
- upon detecting that the PnC feature has been enabled, *activating* **207, 405,** by the processing circuitry **502,** the PnC feature to authorize and authenticate charging of the vehicle **100.**

Example 18: The method of any of examples 12-17, further comprising:
- *determining* **204, 402,** by the processing circuitry **502,** that the vehicle **100** is located within a distance of at least one charging station **103** that supports the PnC feature; and
wherein it is determined that the vehicle **100** comprises one or more charging certificates that are compatible with the at least one charging station **103** when it has been determined that the vehicle **100** is located within the distance.

Example 19: A computer program product comprising program code for performing, when executed by a processing circuitry **502,** the method of any of examples 12-18.

Example 20. A non-transitory computer-readable storage medium comprising instructions, which when executed by a processing circuitry **502,** cause the processing circuitry **502** to perform the method of any of examples 12-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (500) for enabling authentication and authorization of charging an at least partly electrically driven vehicle (100), wherein the computer system (500) comprises processing circuitry (502) configured to:
determine if at least one charging station (103) associated with the vehicle supports a plug and charge, PnC, feature for authentication and authorization of charging of the vehicle (100);
when the at least one charging station (103) supports the PnC feature, determine that the vehicle (100) comprises one or more than one charging certificate that is compatible with the at least one charging station (103) supporting the PnC feature;
determine a selection parameter for each pair of charging station (103) and charging certificate when the vehicle (100) comprises more than one charging certificate (103) that is compatible with the at least one charging station (103); and to
based on a result of a comparison of the selection parameter for each pair of charging station (103) and charging certificate select the pair having a selection parameter that fulfills a criterion to be used for charging the vehicle (100).

2. The computer system (500) of claim 1, wherein the processing circuitry (502) is further configured to:
trigger the vehicle (100) to travel to the charging station (103) belonging to the pair fulfilling the criterion.

3. The computer system (500) of any of claims 1-2, wherein the processing circuitry (502) is further configured to:
when there is one or more compatible charging certificates, provide information indicating an option to enable the PnC feature in the vehicle (100), wherein the information is accessible to a user of the vehicle (100).

4. The computer system (500) of any of claims 1-3, wherein the processing circuitry (502) is further configured to:
provide information indicating the at least one charging station (103) that is associated with the vehicle (100), wherein the information is accessible to a user of the vehicle (100).

5. The computer system (500) of any of claims 3-4, wherein the processing circuitry (502) is further configured to:
detect that the PnC feature has been enabled in the vehicle (100), and wherein the PnC feature is set as a primary charging authorization and authorization method once it is enabled.

6. The computer system (500) of any of claims 1-5, wherein the processing circuitry (502) is further configured to:
upon detecting that the PnC feature has been enabled, activate the PnC feature to authorize and authenticate charging of the vehicle (100).

7. The computer system (500) of any of claims 1-6, wherein the processing circuitry (502) is further configured to:
determine that the vehicle (100) is located within a distance of at least one charging station (103) that supports the PnC feature; and to
determine that the vehicle (100) comprises one or more charging certificates that is compatible with the at least one charging station (103) when it has been determined that the vehicle (100) is located within the distance.

8. The computer system (500) of any of claims 1-7, wherein the processing circuitry (502) is further configured to:
detect that the vehicle (100) is connected to the charging station (103) in the pair that fulfils the criterion; and to
trigger start of a charging sequence once the PnC feature has been enabled and activated and the vehicle (100) has been connected to the charging station (103) in the pair that fulfils the criterion.

9. The computer system (500) of any of claims 1-8, wherein selection parameter is associated with a possibility of success of energy transfer from the charging station (103) to the vehicle (100) or a priority for selecting the pair.

10. The computer system (500) of claim 8, wherein the possibility of success is determined using a Machine Learning, ML, algorithm.

11. The computer system (500) of claim 10, wherein vehicle information and/or charging station information is used as input to the ML algorithm.

12. A vehicle (100) comprising the computer system (500) of any of claims 1-11.

13. A computer-implemented method for enabling authentication and authorization of charging an at least partly electrically driven vehicle (100), the method comprising:
*determining* (202, 401), by a processing circuitry (502) of a computer system (500), if at least one charging station (103) associated with the vehicle (100) supports a plug and charge, PnC, feature for authentication and authorization of charging of the vehicle (100);
when the at least one charging station (103) supports the PnC feature, *determining* (208, 406), by the processing circuitry (502), that the vehicle (100) comprises one or more than one charging certificate that is compatible with the at least one charging station (103) supporting the PnC feature;
*determining* (210, 407), by the processing circuitry (502), a selection parameter for each pair of charging station (103) and charging certificate when the vehicle (100) comprises more than one charging certificate (103) that is compatible with the at least one charging station (103); and
based on a result of a comparison of the selection parameter for each pair of charging station (103) and charging certificate, *selecting* (211, 408), by the processing circuitry (502), the pair having a selection parameter that fulfils a criterion to be used for charging the vehicle (100).

14. A computer program product comprising program code for performing, when executed by a processing circuitry (502), the method of claim 13.

15. A non-transitory computer-readable storage medium comprising instructions, which when executed by a processing circuitry (502), cause the processing circuitry (502) to perform the method of claim 13.
